# EUROPÄISCHE PATENTSCHRIFT

(11) **EP 1 090 227 B1**
(45) Veröffentlichungstag und Bekanntmachung des Hinweises auf die Patenterteilung: **26.03.2003**
(21) Anmeldenummer: 99926462.5
(22) Anmeldetag: 28.05.1999
(51) Int. Cl.: F04B 9/04, F16C 3/22

(54) **EXZENTERANORDNUNG**
ECCENTRIC SYSTEM
DISPOSITIF EXCENTRE

(30) Priorität: 22.06.1998 DE 19827653
(43) Veröffentlichungstag der Anmeldung: 11.04.2001
(73) Patentinhaber: Continental Teves AG & Co. oHG, 60488 Frankfurt am Main (DE)
(72) Erfinder: VOLZ, Peter, D-64291 Darmstadt (DE)
(86) Internationale Anmeldenummer: EP9903707
(87) Internationale Veröffentlichungsnummer: WO99067533

(56) Entgegenhaltungen:
- EP-A- 0 539 849
- DE-A- 19 625 686
- DE-A- 19 636 508
- DE-A- 19 648 319
- DE-C- 19 720 615
- US-A- 5 348 382

## Beschreibung

Die vorliegende Erfindung betrifft eine Exzenteranordnung gemäß dem Oberbegriff des Patentanspruchs 1. Eine solche Exzenteranordnung ist bereits aus der DE 196 36 508 A1 bekannt.

Exzenteranordnung dieser Art werden in vielfältiger Weise zur Umsetzung von Rotations- in Linearbewegungen eingesetzt und eignen sich insbesondere für den Einsatz in Radialkolbenpumpen. Aus der eingangs genannten DE 196 36 508 A1 ist eine Exzenteranordnung bekannt, die in einer Radialkolbenpumpe zur Förderung von Bremsflüssigkeit in geregelten Kraftfahrzeug-Bremssystem eingesetzt wird. Die prinzipielle Arbeitsweise derartiger Pumpen besteht darin, daß eine elektromotorisch betriebene Exzenterwelle über den Exzenter zumindestens zwei Kolben gegenläufig antreibt. Um ein Schleifen der Exzenterwelle an den antriebsseitigen Enden der Kolben zu vermeiden, ist auf den Exzenter der Antriebswelle ein Radiallager aufgesteckt, welches den Radialbewegungen des Exzenters folgt, gegenüber den antriebsseitigen Enden des Kolbens allerdings feststeht.
Das Radiallager ist entweder mit einer in axialer Richtung beidseitig offen ausgeführten oder einseitig den Exzenterzapfen umgreifenden Lagerschale ausgeführt, wodurch das auf den Exzenter festgesteckte Radiallager bei der beschriebenen Exzenteranordnung axial nur in eine Richtung oder überhaupt nicht gesichert ist.
Die DE 196 32 167 beschreibt ebenfalls eine Exzenteranordnung, wobei ein auf einen Exzenterring aufgestecktes Radiallager ebenfalls nur axial in eine Richtung fixiert ist.Dadurch besteht durch die beim Pumpen auftretenden Schwingungen die Gefahr, daß die Lager von ihrer Position wegwandern.

Aufgabe der vorliegenden Erfindung ist es deshalb, eine Exzenteranordnung so zu gestalten, daß ein axiales Wandern nur minimal auftritt oder ganz verhindert wird.

Die erfindungsgemäße Lösung dieser Aufgabe wird durch die Merkmale des Patentanspruchs 1 wiedergegeben. Die weiteren Ansprüche enthalten vorteilhafte Aus- und Weiterbildungen der Erfindung.

Die Erfindung der Exzenteranordnung besteht im wesentlichen darin, die Lagerschale des am Exzenterring angeordneten Radiallagers als Käfig so auszubilden, daß die radial orientierten Seitenwände der Lagerschale die Stirnflächen des Exzenterrings umgreifen. Ein wesentlicher Vorteil der Erfindung besteht darin, daß der axiale Freiheitsgrad des Lagers auf ein notwendiges Minimum beschränkt ist. Dies wird dadurch erreicht, daß die Innenseiten der radial orientierten Seitenwände des Exzenterlagers in beiden axialen Richtungen an den Stirnflächen des Exzenterrings anlaufen können. Dadurch wird gewährleistet, daß eine freie Wanderung des Exzenterlagers ausgeschlossen ist.

Um die Reibung zwischen den Stirnflächen des Exzenterrings und den Innenflächen der radial orientierten Seitenwände der Lagerschale abzusenken, empfiehlt sich die Weiterbildung der Erfindung nach den Merkmalen des Anspruchs 2. Wenn also die Innenseiten der radial orientierten Seitenwände der Lagerschale als Anlaufflächen ausgeführt sind, läßt sich die Reibung erheblich herabsetzen. Hierzu schlägt die Erfindung vor, die Anlaufflächen durch Schleifen oder mittels einer Beschichtung mit einer glatten Oberfläche zu versehen. Als Beschichtung kann vorteilhafterweise Kunststoff oder eine harte, glatte Metallschicht verwendet werden. Zur weiteren Reduzierung der Reibung können vorteilhafterweise die Stirnflächen des Exzenterrings wie die Anlaufflächen der Lagerschalen ausgeführt werden.

Weitere Merkmale, Vorteile und Einzelheiten der Erfindung ergeben sich aus der zeichnerischen Darstellung und der nachfolgenden Beschreibung der erfinderischen Kolbenpumpe.
Es zeigen:
- Fig. 1: ein Querschnitt durch eine Radialkolbenpumpe in der eine erfindungsgemäße Ausführungsvariante der Exzenteranordnung Anwendung findet und
- Fig. 2: eine erfindungsgemäße Ausführungsvariante der Exzenteranordnung im Detail.

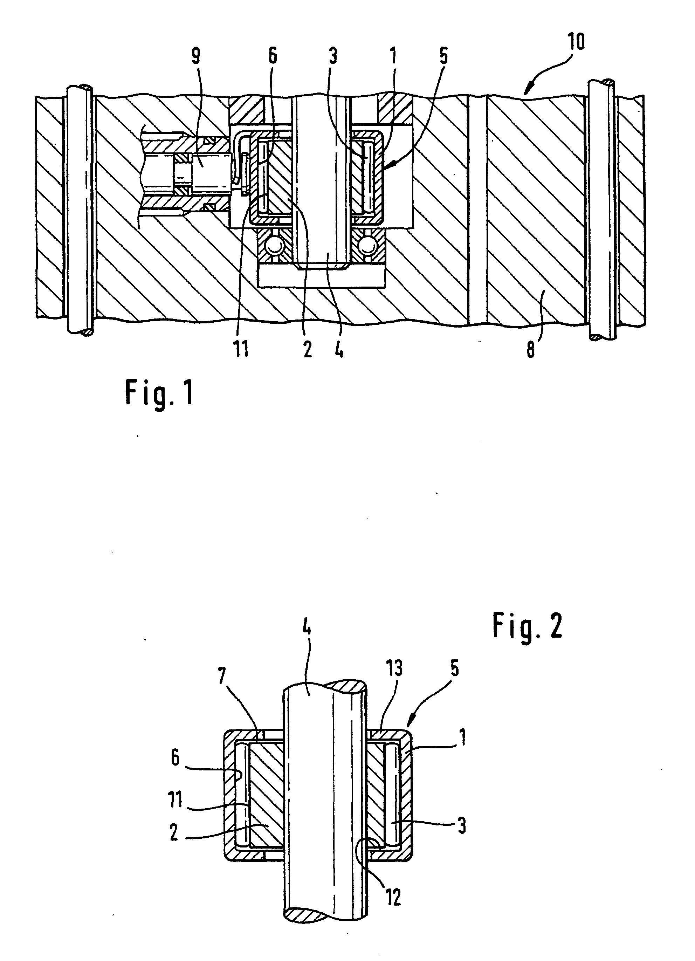

Fig. 1 zeigt eine Radialkolbenpumpe 10, die mit einem oder mehreren Arbeitskolben 9 ausgestattet ist, von denen einer beispielhaft gezeigt ist. Die Arbeitskolben werden in einem Pumpengehäuse 8 geführt und mittels eines Exzenters angetrieben. Der Exzenter besteht aus einem auf eine Welle 4 gefügten und mit ihr drehsicher verbundenen Exzenterring 2, an dem ein Exzenterlager 5 angeordnet ist, welches aus einer Lagerschale 1 und mehreren Wälzkörpern 3 besteht. Die antriebsseitigen Enden der Arbeitskolben 9 liegen an der Lagerschale 1 des Exzenterlagers 5 an. Zwischen den Arbeitskolben 9 und der Lagerschale 1 entsteht während des Betriebs der Pumpe keine Relativbewegung. Der Arbeitskolbenhub wird mittels des Exzenters, der die rotierende Bewegung der Welle 4 in eine Linearbewegung umsetzt, erzeugt. Um den Stillstand der Lagerschale 1 zu gewährleisten, rollen während der Drehbewegung des Exzenters die Wälzkörper 3 zwischen der Lauffläche 6 der Lagerschale und der Umfangsfläche 11 des Exzenterrings 2 ab.

In Fig. 2 wird der Aufbau der Exzenteranordnung mit einem Exzenterlager 5 im Detail gezeigt. Um die rotierende Bewegung der Welle 4 auf den Exzenter zu übertragen, ist der Exzenterring 2 verdrehsicher auf die Welle 4 gefügt. Um die Verdrehsicherheit zu gewährleisten, kann der Exzenterring 2 z.B. auf die Welle 4 aufgepreßt oder aufgeschrumpft werden. Am Exzenterring 2 ist das Exzenterlager 5 in Form eines Nadelkranzes angeordnet. Die Lagerschale 1 ist als Käfig so ausgebildet, daß sie die Wälzkörper 3 und die Stirnflächen des Exzenterrings 2 umgreift. Die Innenseiten 12 der radial ausgerichteten Seitenwände 11 der Lagerschale 1 sind als Anlaufflächen ausgelegt. Zur Minimierung der Reibung sind diese Anlaufflächen mit Kunststoff oder einer harten Metallschicht überzogen. Die Ausführung der Lagerschale 1 als den Exzenterring 2 umgreifenden Käfig verhindert das axiale Wandern des Exzenterlagers 5.
Als zweiter Reibpartner der zur Anlaufpaarung gehörenden Flächen kann die Stirnfläche 7 des Exzenterrings 2 mit den gleichen Maßnahmen wie beim Lagerschale 1 beschrieben zur Minderung der Reibung behandelt werden.

Der Einsatz der erfindungsgemäßen Exzenteranordnung ist nicht auf Radialkolbenpumpen beschränkt. Das Lager kann überall dort eingesetzt werden, wo ein axiales Wandern des Lagers und eine Relativbewegung zu einer ortsfesten Wand verhindert werden soll. Vorteilhaft bei dem erfindungsgemäßen Radiallager ist die Tatsache, daß auf einen Innenring für das Lager verzichtet werden kann, wodurch das Lager in radialer Richtung relativ klein baut. Ein weiterer Vorteil des Lagers besteht darin, daß vorab mit dem Lager bestückte Wellen axial in Lageröffnungen eingefügt werden können, da das Lager in der Lage ist auch axiale Tangentialkräfte aufzunehmen.

## Patentansprüche

1. Exzenteranordnung mit einem Exzenterlager (5), welches an einer Welle (4) angeordnet ist und eine Lagerschale (1) mit radial zur Welle (4) gerichteten Seitenwänden (13) aufweist, **dadurch gekennzeichnet, daß** zwischen der Welle (4) und der Lagerschale (1) ein Exzenterring (2) mit einer sich axial zur Welle (4) erstreckenden Umfangsfläche (11) und mindestens einer radial zur Welle (4) ausgebildeten Stirnfläche (7) vorgesehen ist, wobei die Seitenwände (13) der Lagerschale (1) zumindest eine Stirnfläche (7) des Exzenterringes (2) umgreifen.

2. Exzenteranordnung nach Anspruch 1, **dadurch gekennzeichnet, daß** das Exzenterlager (5) als Wälzoder Gleitlager ausgebildet ist.

3. Exzenteranordnung nach Anspruch 1, **dadurch gekennzeichnet, daß** als Welle eine Antriebswelle (4) vorgesehen ist.

4. Exzenteranordnung nach Anspruch 3, **dadurch gekennzeichnet, daß** die Antriebswelle (4) einen exzentrisch angeordneten Zapfen aufweist.

5. Exzenteranordnung nach Anspruch 2, **dadurch gekennzeichnet, daß** das Exzenterlager (5) als Wälzlager mit Wälzkörpern (3) ausgebildet ist, wobei die Lagerschale (1) als Käfig ausgeführt ist, der sowohl die Wälzkörper (3) senkrecht zur ihrer Lauffläche (6) als auch die Stirnflächen (7) des Exzenterringes (2) umgreift.

6. Exzenteranordnung nach Anspruch 2, **dadurch gekennzeichnet, daß** die Innenseiten (12) der Seitenwände (13) der Lagerschale (1) als Anlaufflächen ausgeführt sind.

7. Exzenteranordnung nach Anspruch 6, **dadurch gekennzeichnet, daß** die Anlaufflächen gehärtet und geschliffen sind.

8. Exzenteranordnung nach Anspruch 6, **dadurch gekennzeichnet, daß** die Anlaufflächen reibungsarm ausgeführt sind.

9. Exzenteranordnung nach Anspruch 6, **dadurch gekennzeichnet, daß** die Anlaufflächen mit Kunststoff beschichtet sind.

10. Exzenteranordnung nach Anspruch 2, **gekennzeichnet durch** die Verwendung in einer Radialkolbenpumpe (10).

11. Exzenteranordnung nach Anspruch 2, **gekennzeichnet durch** die Verwendung in einer Radialkolbenpumpe (10) eines Motorpumpenaggregats eines elektronisch gesteuerten Bremsensystems für Kraftfahrzeuge.

## Claims

1. Eccentric arrangement comprised of an eccentric bearing (5) that is arranged on a shaft (4) and includes a bearing bushing (1) with lateral walls (13) extending in a radial direction relative to the shaft (4),
**characterized in that** between the shaft (4) and the bearing bushing (1), there is arranged an eccentric ring (2) with a circumferential surface (11) that extends axially to the shaft (4) and at least one end surface (7) designed in a radial direction relative to the shaft (4), wherein the lateral walls (13) of the bearing bushing (1) embrace at least one end surface (7) of the eccentric ring (2).

2. Eccentric arrangement as claimed in claim 1,
**characterized in that** the eccentric bearing (5) is configured as a roller bearing or a friction bearing.

3. Eccentric arrangement as claimed in claim 1,
**characterized in that** a drive shaft (4) is provided as a shaft.

4. Eccentric arrangement as claimed in claim 3,
**characterized in that** the drive shaft (4) includes an eccentrically arranged pin.

5. Eccentric arrangement as claimed in claim 2,
**characterized in that** the eccentric bearing (5) is configured as a roller bearing with roll bodies (3) wherein the bearing bushing (1) is designed as a cage encompassing both the roll bodies (3) vertically to their running surface (6) and the end surfaces (7) of the eccentric ring (2).

6. Eccentric arrangement as claimed in claim 2,
**characterized in that** the inside surfaces (12) of the lateral walls (13) of the bearing bushing (1) are designed as abutment surfaces.

7. Eccentric arrangement as claimed in claim 6,
**characterized in that** the abutment surfaces are hardened and ground.

8. Eccentric arrangement as claimed in claim 6,
**characterized in that** the abutment surfaces have a low-friction design.

9. Eccentric arrangement as claimed in claim 6,
**characterized in that** the abutment surfaces are coated with a plastic material.

10. Eccentric arrangement as claimed in claim 2,
**characterized by** its use in a radial piston pump (10).

11. Eccentric arrangement as claimed in claim 2,
**characterized by** its use in a radial piston pump (10) of a motor-and-pump assembly of an electronically controlled brake system for automotive vehicles.

## Revendications

1. Dispositif excentrique, avec un palier excentrique (5) qui est disposé sur un arbre (4) et présente un coussinet (1) dont les parois latérales (13) sont orientées radialement par rapport à l'arbre (4), **caractérisé en ce qu'**une bague excentrique (2) est prévue entre l'arbre (4) et le coussinet (1), bague qui présente une face circonférentielle (11) s'étendant axialement par rapport à l'arbre (4) et au moins une face frontale (7) configurée radialement par rapport à l'arbre (4), les parois latérales (13) du coussinet (1) entourant au moins une face frontale (7) de la bague excentrique (2).

2. Dispositif excentrique selon la revendication 1, **caractérisé en ce que** le palier excentrique (5) est conçu comme palier à roulement ou comme palier lisse.

3. Dispositif excentrique selon la revendication 1, **caractérisé en ce qu'**un arbre d'entraînement (4) est prévu comme arbre.

4. Dispositif excentrique selon la revendication 3, **caractérisé en ce que** l'arbre d'entraînement (4) présente un tourillon disposé excentriquement.

5. Dispositif excentrique selon la revendication 2, **caractérisé en ce que** le palier excentrique (5) est réalisé sous forme de palier à roulement présentant des corps de révolution (3), le coussinet (1) étant conçu comme cage qui entoure à la fois les corps de révolution (3), perpendiculairement à sa surface de roulement (6), et les faces frontales (7) de la bague excentrique (2).

6. Dispositif excentrique selon la revendication 2, **caractérisé en ce que** les côtés intérieurs (12) des parois latérales (13) du coussinet (1) sont conçues comme faces de portée.

7. Dispositif excentrique selon la revendication 6, **caractérisé en ce que** les faces de portée sont trempées et rectifiées.

8. Dispositif excentrique selon la revendication 6, **caractérisé en ce que** les faces de portée sont réalisées à faible frottement.

9. Dispositif excentrique selon la revendication 6, **caractérisé en ce que** les faces de portée sont revêtues de matière plastique.

10. Dispositif excentrique selon la revendication 2, **caractérisé par** son utilisation dans une pompe (10) à pistons radiaux.

11. Dispositif excentrique selon la revendication 2, **caractérisé par** son utilisation dans une pompe (10) à pistons radiaux d'un ensemble moteur-pompe d'un système de freinage à commande électronique pour des véhicules automobiles.
